# EUROPEAN PATENT SPECIFICATION

(11) **EP 3 850 931 B1**
(45) Date of publication and mention of the grant of the patent: **11.10.2023**
(21) Application number: 20152525.0
(22) Date of filing: 17.01.2020
(51) Int. Cl.: A01B 63/14, A01B 3/46, A01B 61/04, A01B 67/00

(54) **METHOD FOR CONTROLLING AN AGRICULTURAL MACHINERY**
VERFAHREN ZUR STEUERUNG EINER LANDWIRTSCHAFTLICHEN MASCHINE
PROCÉDÉ DE COMMANDE D'UNE MACHINE AGRICOLE

(43) Date of publication of application: 21.07.2021
(73) Proprietor: CNH Industrial Sweden AB, 590 96 Överum (SE)
(72) Inventor: Hertzog, Daniel, 59376 Blackstad (SE); Nåhdin, Rickard Karl Gustav, 59492 Gamleby (SE); Svensson, Robert, 59095 Loftahammar (SE); Wallin, Per Dennis, 693 37 Västervik (SE); Linderson, Bengt Per-Inge, 594 94 Odensvi (SE); Nilsson, Carl Ola Fredrik, 59340 Västervik (SE)
(74) Representative: CNH Industrial IP Department

(56) References cited:
- EP-A1- 3 050 416
- EP-A2- 1 169 902
- DE-A1-102011 085 040
- JP-A- H05 137 405

## Description

### Background of the Invention

The present invention relates to a method for controlling an operation of an agricultural machinery, particularly, but not exclusively, for controlling an agricultural plough. Other aspects of the present disclosure relate to an agricultural machinery, particularly, but not exclusively, an agricultural plough, and a computer program.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset manner from each other when the plough is in use. Each plough body is connected to the plough frame via corresponding beams. The plough frame, in turn, is connected to a towing or pushing vehicle via a hitch arranged at a front or back end of the frame.

Ever increasing productivity demands require higher tillage efficiency and particularly a need for faster tillage processes. To this end, modern tillage implements, such as the above plough implements, are becoming ever larger (e.g. higher numbers of plough bodies) and consequently also heavier. Larger and heavier tillage implements, however, lead to an increase in work vehicle load, which often results in excessive amounts of wheel slip on the driven wheels of the towing vehicle (e.g. the tractor).

In view of the above, there is generally a need for an improved agricultural machinery and a method for controlling said agricultural machinery.

It is an aim of the present disclosure to solve or at least ameliorate one or more problems of the prior art.

EP3050416 (A1) relates to a soil cultivation device with an attachment device for attachment to the lower link of a tractor and a chassis for supporting the soil cultivation device on the ground, with a working depth of the soil cultivation device being adjustable by chassis height adjustment means for height adjustment of the chassis and lower link height adjustment means for height adjustment of the lower links.

JPH05137405 (A) describes a diff-locking apparatus placed in a differential case of the rear wheels of a farm tractor.

DE102011085040 (A1) describes an agricultural vehicle having a determining unit that determines and specifies the attachment portion to-be-attached to a coupling device.

EP1169902 (A2) describes a method of controlling a tractor/implement combination including obtaining and storing calibration data on the torque generated at the tractor flywheel, while the implement is disengaged from the ground.

### Summary of the Invention

Aspects and embodiments of the invention provide a method for controlling an agricultural machinery and a corresponding control unit as claimed in the appended claims.

According to an aspect of the present invention, there is provided a computer-implemented method for controlling an operation of an agricultural machinery, the agricultural machinery comprising:
a work vehicle with at least one driven wheel;
an agricultural implement connected to the work vehicle and comprising at least one ground engaging tool; and
an actuator mechanism for moving at least components of the agricultural implement with respect to the work vehicle,
wherein the method comprises:
   receiving wheel-slip-data indicative of an amount of wheel slip for the driven wheel of the work vehicle;
   determining an actuator-control-signal for moving at least components of the agricultural implement on the basis of the wheel-slip-data; and
   providing the determined actuator-control-signal to the actuator mechanism of the agricultural machinery between tillage of successive working rows.

In an embodiment, determining the actuator-control-signal comprises identifying if an amount of wheel slip represented by the wheel-slip-data is above a first predetermined threshold, and moving components of the agricultural implement if the amount of wheel sleep is above the first predetermined threshold, and/or wherein determining the actuator-control-signal comprises identifying if an amount of wheel slip represented by the wheel-slip-data is below a second predetermined threshold, and moving components of the agricultural implement if the amount of wheel sleep is below the second predetermined threshold

The actuator-control-signal may be determined on the basis of a difference between an amount of wheel slip represented by the wheel-slip-data and a desired amount of wheel slip.

The actuator-control-signal may be determined repeatedly, preferably at periodic time intervals.

In another embodiment, the agricultural implement comprises a driven implement wheel, the method comprising determining an implement-wheel-control-signal for setting a desired implement wheel speed on the basis of the wheel-slip-data.

In yet another embodiment, the actuator-control-signal comprises one or more of:
instructions for changing the working depth of the ground engaging tool;
instructions for removing the ground engaging tool from the soil;
instructions for changing the working width of the agricultural implement;
instructions for changing the pitch angle of a main frame of the agricultural implement;
instructions for changing the angle of the ground engaging tool with respect to a horizontal plane;
instructions for decreasing a bias of a stone-trip-mechanism of the ground engaging tools.

In yet another embodiment, the wheel-slip-data is indicative of current or predicted future amounts of wheel slip for the driven wheel.

In another embodiment, the wheel-slip-data comprises one or more of:
current wheel speed values of the driven wheel;
current ground speed values of the work vehicle;
a moisture content of the soil;
soil compaction levels of the soil;
contours of the field;
a soil type;
a temperature of the soil.

In another embodiment, the method comprises delaying a movement of components of the agricultural implement with respect to the work vehicle until a current working row is completed, if an amount of wheel slip represented by the wheel-slip-data is above a first predetermined threshold or if an amount of wheel slip represented by the wheel-slip-data is below a second predetermined threshold.

The method may comprise temporarily decreasing the wheel speed of the agricultural work vehicle, if movement of the ground engaging tool is delayed until the current working row is completed.

In another embodiment, the agricultural work vehicle comprises at least one driven front wheel and at least one driven rear wheel, and wherein the method comprises temporarily changing a speed ratio between the rear wheels and the front wheels, if movement of the ground engaging tool is delayed until the current working row is completed.

According to another aspect of the present invention, there is provided a control unit for controlling an agricultural machinery, the agricultural machinery comprising:
an agricultural work vehicle comprising at least one driven wheel;
an agricultural implement comprising at least one ground engaging tool;
an actuator mechanism for moving at least components of the agricultural implement with respect to the work vehicle,
wherein the control unit is configured to:
   receive wheel-slip-data indicative of an amount of wheel slip for the driven wheel of the work vehicle;
   determine an actuator-control-signal for moving at least components of the agricultural implement on the basis of the wheel-slip-data; and
   provide the determined actuator-control-signal to the actuator mechanism of the agricultural machinery between tillage of successive working rows.

According to another aspect of the present disclosure, there is provided an agricultural implement, particularly a plough implement, comprising the above control unit.

In another aspect of the present invention, there is provided a computer program according to claim 13.

In another aspect of the present disclosure, there is provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural work vehicle (or tractor) of the agricultural machinery disclosed herein may include one or more control units, such as but not limited to programmable or non-programmable processors. Similarly, the plough implement may include one or more control units, such as but not limited to programmable or non-programmable processors. Additionally or alternatively, the agricultural implement may be controlled by one or more control units of the agricultural work vehicle. Similarly, the agricultural work vehicle may be controlled by one or more control units of the agricultural implement.

The agricultural work vehicle and/or the plough implement may be remote controlled, e.g. from a farm office. Accordingly, the agricultural work vehicle may include one or more communication interfaces for connection to a remote processor and/or a remote controller. Similarly, the agricultural implement may include one or more communication interfaces for connection to a remote processor and/or a remote controller.

### Brief Description of the Drawings

One or more embodiments of the present disclosure will now be described by way of example only, with reference to the accompanying drawings, in which:
Figure 1A shows a right-side view of a plough implement with fixed ground engaging tools;
Figure 1B shows a left-side view of the plough implement shown in Figure 1A;
Figure 1C shows a plan view of the plough implement shown in Figure 1A;
Figure 2 shows a schematic representation of the trajectory of an agricultural machinery within a work area;
Figure 3 shows a schematic representation of a system for controlling an agricultural machinery;
Figure 4 shows a flow diagram for a method according to an embodiment of the present disclosure;
Figure 5 shows a schematic representation of an agricultural machinery moving uphill;
Figure 6 shows a schematic representation of a ground engaging tool connected to the main frame of a plough implement via a four-bar-linkage.

### Detailed Description of the Drawings

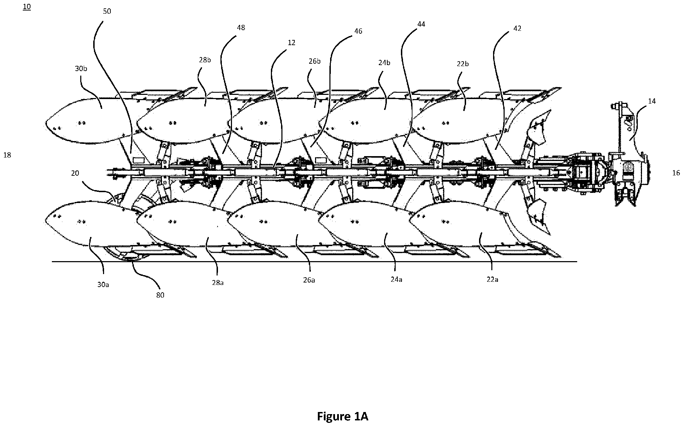

Figures 1A to 1C show various views of a plough implement, particularly a plough implement 10. As will be described in more detail below, the plough implement 10 shown in Figures 1A to 1C is a reversible plough.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of skimmers 40a, 40b. The skimmers 32a, 32b, 34a, 34b, 36a, 36b, 38a, 38b, 40a, 40b and/or their respective mounting rails 52, 54, 56, 58, 60 may be adjustable with respect to the main frame 12 to change the distance between the skimmers 32a, 32b, 34a, 34b, 36a, 36b, 38a, 38b, 40a, 40b and the main frame 12. In one example, the skimmers 32a, 32b, 34a, 34b, 36a, 36b, 38a, 38b, 40a, 40b may be movable up and down towards and away from the main frame 12 to individually adjust the working depth of each of skimmers 32a, 32b, 34a, 34b, 36a, 36b, 38a, 38b, 40a, 40b. The skimmers 32a, 32b, 34a, 34b, 36a, 36b, 38a, 38b, 40a, 40b may either be manually or automatically adjustable.

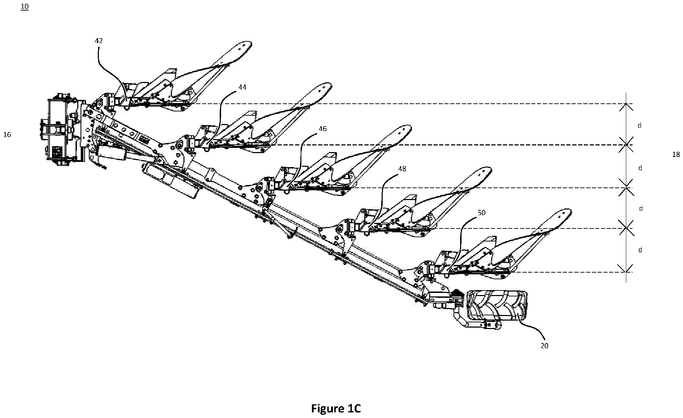

A furrow width is determined by the lateral distance d between the plough bodies 22a, 22b, 24a, 24b, 26a, 26b, 28a, 28b, 30a, 30b, as illustrated in Figure 1C. The lateral distance d between the plough bodies may be adjusted by a plough-width-adjustment-actuator 70, which in this embodiment is a hydraulic cylinder. The plough-width-adjustment-actuator 70 is connected on one end to the main frame 12 and configured to change the angle of the main frame 12 with respect to a direction of travel. Generally, extending the plough-width-adjustment-actuator 70 will reduce the angle of the main frame 12 with respect to a direction of travel and thus decrease the distance d between adjacent plough bodies. Retracting the plough-width-adjustment-actuator 70 will, in turn, increase the angle of the main frame 12 with respect to a direction of travel thus increase the distance d between adjacent plough bodies.

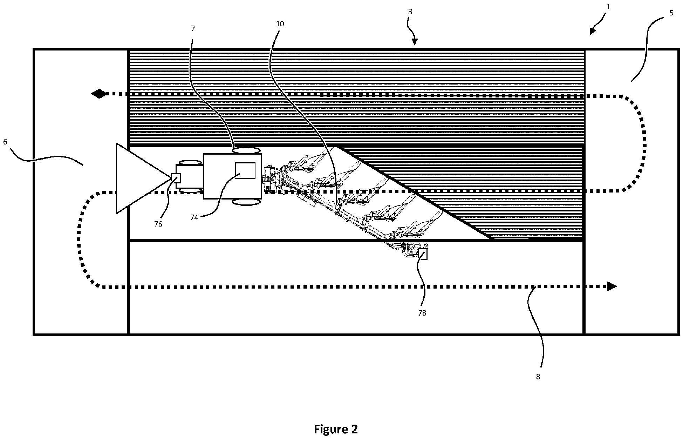

Turning to Figure 2, a typical operation of an agricultural machinery comprising an agricultural work vehicle 7 and a tillage implement, e.g. the plough implement 10, is described. In use, the plough implement 10 is drawn as an attachment (implement) behind the agricultural towing vehicle 7 (e.g. an agricultural work vehicle). It will be appreciated that it is equivalently feasible to locate the plough implement 10 in front of or both in front of and behind the agricultural work vehicle 7.

Figure 2 shows a schematic field 1, e.g. a crop field, which is divided into a main work area 3 and headlands 5,6. An agricultural work vehicle 7 draws the plough implement 10 across the work area 3 in generally parallel working rows 9a, 9b, 9c. The working rows 9a, 9b, 9c are part of the trajectory 8 of the agricultural work vehicle 7 and typically run in parallel with a long edge of the work area 1. Choosing to orientate the working rows 9a, 9b, 9c in parallel with the long edge of the work area will reduce the number of headland turns required. Each working row 9a, 9b, 9c represents an individual run of the agricultural machinery across the main area between headlands 5 and 6. As will be described in more detail below, a five-furrow plough, such as the exemplary plough shown in Figures 1A to 1C creates a total of five furrows per run/working row 9a, 9b, 9c.

It will be appreciated that, in the example of Figure 2, the agricultural machinery, i.e. the plough, has already completed the first working row 9a, which may thus be considered to be a past or completed working row. Furthermore, the plough is shown during work on the second work row 9b, which is adjacent and parallel to the first working row 9a. The second working row may be considered to be a current working row. A third working row 9c, which in Figure 2 is a future planned section of the trajectory 8, is adjacent and parallel to the second working row 9b. Work on the third working row 9c has not yet commenced and thus the third working row 9c may be considered to be a future working row.

At the end of each run/working row 9a, 9b, 9c, the agricultural work vehicle 7 and plough implement 10 of the plough use the upcoming headland 5 or 6 for turning around, as indicated by trajectory 8. The soil of the headlands 5, 6 may be subject to greater levels of soil compaction as it receives more traffic per unit area than the work area 3. In order not to disturb the soil of the headlands 5, 6 more than necessary, the ground engaging tools, such as the plough bodies and the skimmers, are lifted off the ground into a headland or transfer position, just before the plough implement 10 reaches the headlands 5, 6 respectively. Once the agricultural work vehicle 7 and the corresponding plough implement 10 have turned on the headland 5, 6, the ground engaging tools of the plough implement 10 are, again, lowered towards an operating position to engage the soil of the work area 3.

In the illustration of Figure 2, the plough implement 10 is working on the second working row 9b and, therefore, is arranged in the operating position. As the plough implement 10 reaches the boundary between the headland 5, 6 and the work area 3, the plough implement 10 is transferred to a headland/transfer position. It follows that each working row starts with an adjustment of the plough from the headland position into the operating position and ends with an adjustment of the plough from the operating position into the headland position.

Once the plough implement has been transferred into its headland position, the agricultural machinery, including the agricultural work vehicle 7 and the plough implement 10, can be turned back on itself such that the latter faces an opposite direction for the next run on the adjacent working row. In the schematic illustration of Figure 2, a headland routine is illustrated, often described as a "U-turn". The "U-turn" is one of the more basic headland routines and will be described in more detail below. Typically, the operator merely turns the steering wheel until a full 180 degree turn has been completed and work on the next working row can be commenced.

The plough implement 10 shown in Figures 1A to 1C is of the fully-mounted type. In fully-mounted ploughs, the weight of the plough is carried exclusively by the agricultural work vehicle when the plough is in its transfer/headland position (on the headlands). In other words, the plough is then exclusively supported by the agricultural work vehicle 7 via headstock 14 and may be lifted off the ground with a lift cylinder of a tractor linkage.

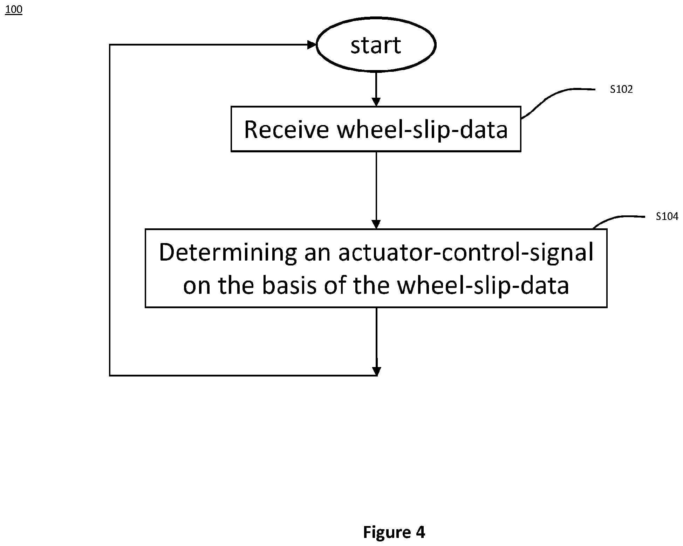

During the turning routine on the headlands, the plough implement 10 is also reversed. That is, the main frame 12 is rotated by 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If operator is ploughing on-land, then the main frame 12 may be rotated by an angle that is closer to 180 degrees, perhaps exactly 180 degrees.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of agricultural work vehicle 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the agricultural work vehicle (not shown). The second configuration is, therefore, also sometimes referred to as the "right side configuration".

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

In both configurations of the plough implement 10 the main frame 12 is supported by an implement wheel 20. The implement wheel 20 is arranged at the back end 18 of the plough implement 10. Since, in the exemplary implement of Figures 1A to 1C the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. Accordingly, the plough implement 10 shown in Figures 1A to 1C includes implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80.

The linkage 62 may be connected to an actuator, e.g. a hydraulic cylinder (not shown), for adjusting the distance between the implement wheel 20 and the main frame 12, thereby lifting and lowering the main frame 12. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If, on the other hand, the main frame 12 is lifted, by extending the linkage 62 between implement wheel 20 and the main frame 12, then the working depth of the plurality of first ground engaging tools is decreased, i.e. the plurality of first ground engagement tools are either raised or completely pulled out of the soil.

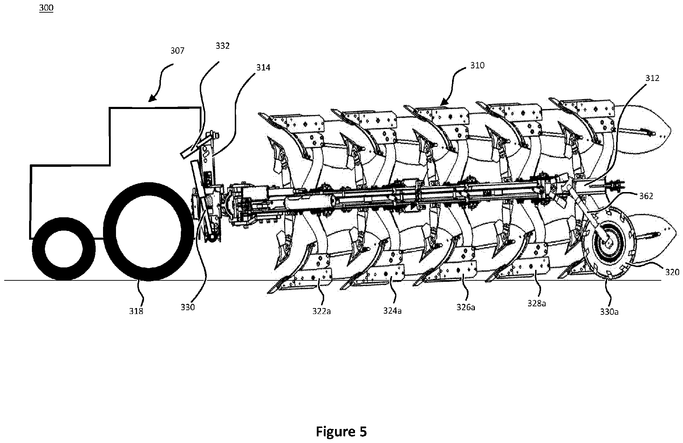

It will be appreciated that extending and retracting the linkage 62 will mainly raise or lower the back end of the plough implement 10. In order to evenly raise the front and the back end of the plough implement 10, the headstock 14 may be raised or lowered together with an adjustment of the linkage 62 of the implement wheel 20. Raising or lowering the headstock may be achieved by means of hydraulic cylinders (cf. Figure 5) connected to lifting arms of the agricultural work vehicle that carry the headstock 14.

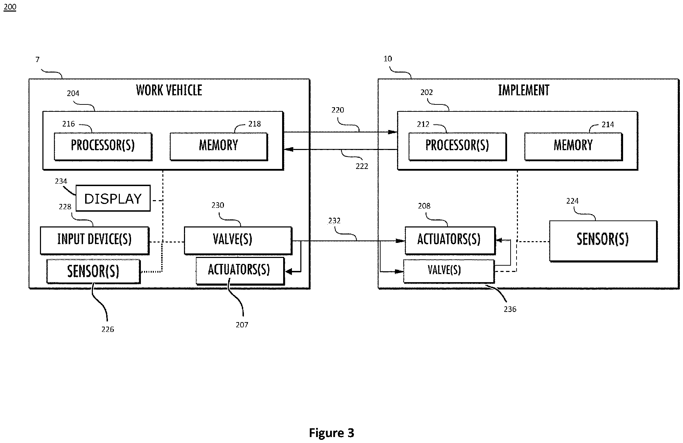

Referring to Figure 3, there is shown a schematic view of an embodiment of a system 200 for controlling an agricultural machinery, particularly an agricultural plough. The system 200 may include a control unit 202 installed on and/or otherwise provided in connection with the plough implement 10. In some embodiments, the system may additionally or alternatively include a control unit 204 which is associated with the agricultural work vehicle 7, such as a towing vehicle (e.g. a tractor). Either the control unit 202 associated with the plough implement 10 and/or the control unit 204 associated with the work vehicle 7 may be capable of electronically controlling the operation of one or more components of the plough implement, such as by electronically controlling the operation of one or more ground engaging tools via corresponding actuators 208. Similarly, either the control unit 202 of the implement or the control unit 204 of the agricultural work vehicle 7 may be capable of controlling operation of one or more components of the agricultural work vehicle 7. In a further alternative (not shown), a remote control unit may be connected (e.g. wirelessly) with one or both of the work vehicle 7 and the plough implement 10 and may be capable of controlling an operation of one or more components of the agricultural work vehicle 7 and/or the plough implement 10.

The control unit 202 associated with the plough implement 10 may include one or more processors 212 associated with one or more memory devices 214. Similarly, the control unit 204 associated with the agricultural work vehicle 7 may also include one or more processors 216 connected to one or more memory devices 218. The control unit 202 of the plough implement 10 and the control unit 204 of the agricultural work vehicle 7 may communicate with each other as indicated by arrows 220, 222. For example, the control unit 202 of the implement may communicate live implement data detected by implement sensors 224 to the control unit 204 of the work vehicle 7. Similarly, control unit 204 of the agricultural work vehicle 7 may communicate with the control unit 202 of the implement via communication line 220 to forward data determined by vehicle sensors 226 or forward direct commands of the operator entered via one or more input devices 228. The control unit 204 of the work vehicle 7 may also be connected to one or more valves 230, such as hydraulic valves. The valves 230 may be part of a hydraulic system (not shown) located on the agricultural work vehicle 7. By controlling valves 230, the control unit 204 may control a hydraulic fluid supply from the hydraulic system directly towards actuators 207 of the work vehicle 7 or, either directly or indirectly, towards actuators 208 of the plough implement 10, via fluid lines 232. Similarly, the control unit 202 of the agricultural plough implement 10 may be connected to one or more valves 236 that are attached to the plough implement 10. By controlling valves 236, the control unit 202 may further control a hydraulic fluid supply to individual actuators 208 of the plough implement 10. In this case, the control unit 204 of the work vehicle may still be directly connected to the valves or it may be connected to the valves via the control unit 202 of the plough implement 10. Again, it should be appreciated that generally only a single control unit may be required to control both the plough implement 10 and the agricultural work vehicle 7 together with their corresponding hardware.

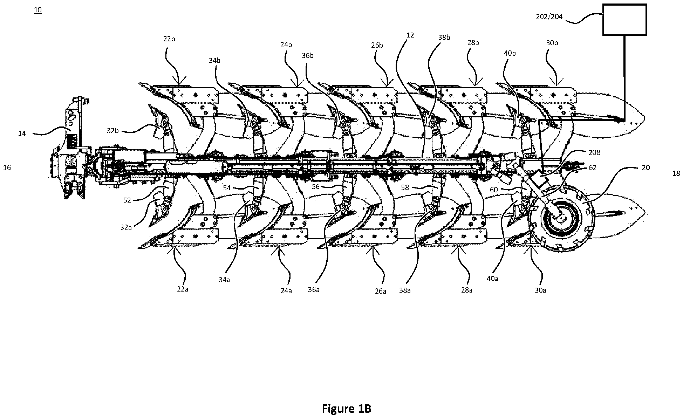

The one or more actuators 207, 208 may be part of an actuator mechanism including one or more depth adjustment apparatus configured to adjust the working depth of one or more of the ground engaging tools of the plough implement 10. In one example, the one or more actuators 207, 208 may correspond to hydraulic actuators associated with linkage 62 and hydraulic actuators connected to lifting arms (330, Figure 5) of the agricultural work vehicle 7, for lifting or lowering the headstock 14 described in connection with Figure 1B. Accordingly, the actuators 207, 208 may be used to change the ground clearance of the main frame of the plough implement 10 depending on an input from either one of the control units 202, 204. In another example, the one or more actuators 208 may be part of an actuator mechanism for adjusting the ploughing-width of the plough implement 10 (cf. plough-width-adjustment-actuator 70, Figure 1C).

The control unit 202 of the implement and/or the control unit 204 of the agricultural work vehicle 7 are capable of determining an actuator-control-signal and, based thereon, automatically controlling an operation of an actuator mechanism for moving one or more of the ground engaging tools (e.g. the plough bodies). In this specification, the term "automatically controlling" refers to the ability of the control units 202 and/or 204 to determine suitable actuator-control-signals without an operator's input. Rather, the control unit(s) 202, 204 is configured to receive wheel-slip-data indicative of an amount of wheel slip for the driven wheel of the work vehicle. The wheel-slip-data received by the control unit 202 of the plough implement 10 and/or the control unit 204 of the agricultural work vehicle 7 may be provided by various sources.

In one embodiment, one or more sensors 226 of the work vehicle 7 may be used to determine live vehicle-data associated with the operation of the work vehicle 7. To this end, the sensors 224, 226 may include a variety of different sensor types for determining various parameters associated with wheel slip of the driven wheel, such as revolutions of a drive axle of the driven wheel or ground speed of the plough.

In one example shown in Figure 2, the sensors 226 of the agricultural work vehicle 7 include wheel speed sensors 74, 76. A first wheel speed sensor 74 may be connected to rear axle of the work vehicle 7 (for rear wheel drive) or to both a front and a rear axle of the work vehicle (for all wheel drive). The first sensor 74 may be used to determine the revolutions of the drive axle and thus provide data on the basis of which the control unit may determine the wheel speed of the driven wheels of the work vehicle.

Alternatively or additionally, the sensors 226 of the agricultural work vehicle 7 may include optical sensors 76 to determine live field-data indicative of the field conditions. In one example, the optical sensor 76 may be used to determine wheel-slip-data indicative of the field conditions ahead of the work vehicle 7. Such wheel-slip-data may be indicative of the contours of the field (e.g. a longitudinal inclination of the field). As will be explained in more detail below, the control unit 202, 204 may use the live field-data to predict future wheel slip experienced by the driven wheels of the agricultural machinery and react accordingly by determining suitable actuator-control-signals for moving the ground engaging tools to accommodate for a predicted change (e.g. increase) in wheel slip.

The sensors 224 of the plough implement 10 may include a second wheel speed sensor 78 that may be connected to a drive axle of the implement wheel 20. The second wheel speed sensor 78 may be used to determine the revolutions of the drive axle of the implement wheel 20 and thus provide data on the basis of which the control unit may determine the wheel speed of the implement wheel 20. This is particularly relevant, if the implement wheel 20 is a driven wheel for moving the plough implement 10.

The work vehicle 7 of system 200 shown in Figure 3 may also include a display 234 to provide feedback to the operator. The display 234 may be used to illustrate the wheel slip of the driven wheels. According to other embodiments, the control units 202, 204 may also display any intended actuator activation for changing the wheel slip during the ploughing operation, on the display 234. The operator may have the option to override any intended activation of an actuator via the control unit to change the wheel slip via input devices 228. Yet, it will be appreciated that the operator's input is generally not required for the system 200 to control the wheel slip of the driven wheels of the agricultural machinery.

In another embodiment, some or all of the wheel-slip-data received by the control unit(s) 202, 204 is not based on live-data. Rather, the wheel-slip-data received by the control unit(s) 202, 204 may be, partly or fully, based on predetermined wheel-slip-data (such as field-contour-data) stored in a database of memory 214, 218. In this embodiment, the only live data required is location data received by either sensors 224 of the plough implement 10 or sensors 226 of work vehicle 7. The sensors providing location data may be GPS sensors to track the live location of the agricultural work vehicle 7 and/or the plough implement 10 within the field. In this embodiment, a database may include information about the field and suitable actuator-control-signals for controlling wheel slip at specific locations within the field. For example, the database may include prior wheel-slip-data associated with previously identified field conditions. The previously identified field conditions may be moisture content of the soil, soil compaction levels, contours of the field, etc. determined prior to the ploughing operation to be controlled. For example, data collected when previously ploughing the field may be reused to determine the necessary adjustments to the plough implement to maintain acceptable wheel slip values. Alternatively, the prior wheel-slip-data may be data collected by independent data collection devices, such as other agricultural work vehicles/implements, or drones used specifically for measuring wheel-slip-data in advance of the ploughing operation. Moreover, the prior wheel-slip-data could be based on satellite images taken of the field prior to the ploughing operation. For example, satellite images may be useful in determining wheel-slip-data indicative of contours of the field and/or the moisture content of the soil.

As the plough implement is moved across the field, the control units 202, 204 determine the location of the plough implement within the field, for example by means of GPS sensors. The control units 202, 204 may then use this location data to match the current location of the plough implement 10 with a wheel-slip-data entry within the memory 214, 218 that is linked to specific field conditions associated with this particular location within the field. This so identified relevant prior wheel-slip-data may then be used by the processors 212, 216 of the control units 202, 204 to calculate a suitable actuator-control-signal. Alternatively, another database may be provided that allows the control unit 202, 204 to look-up a suitable actuator-control-signal corresponding to the relevant prior wheel-slip-data determined for the current location of the plough implement 10.

Turning to Figure 4, there is shown an embodiment of the computer-implemented method according to the present disclosure. The method is for controlling an operation of an agricultural machinery, the agricultural machinery comprising a work vehicle with at least one driven wheel; an agricultural implement connected to the work vehicle and comprising at least one ground engaging tool; and an actuator mechanism for moving at least one component of the agricultural implement with respect to the work vehicle.

In a first step S102, the method comprises receiving wheel-slip-data indicative of an amount of wheel slip for the driven wheel of the work vehicle. This wheel-slip-data may be received by a control unit associated with the agricultural machinery, such as a control unit mounted to either the work vehicle or the agricultural implement, or a control unit communicating remotely with sender/receiver devices of the work vehicle and/or the agricultural implement. As discussed above, the wheel-slip-data may be live data based on current operating parameters/conditions of the work vehicle and/or the agricultural implement. Also, the wheel-slip-data may be based on predicted operating parameters/conditions, for instance using previously determined wheel-slip-data.

On the basis of the wheel-slip-data, the method determines, in a second step S104, an actuator-control-signal for moving the at least one ground engaging tool with respect to the work vehicle. Once the actuator-control-signal determined in the second step S104 is transferred to the actuator mechanism of the agricultural machinery, at least a component (such as the main frame or one or more of the ground engaging tools) of the agricultural implement is moved with respect to the work vehicle in order to either increase or decrease the amount of wheel slip experienced by the driven wheel of the work vehicle.

The method schematically shown in Figure 4 can, therefore, be used to maintain the amount of wheel slip experienced by the driven wheel of the work vehicle within acceptable boundaries. This can improve fuel economy and service live without the need to artificially increase or decrease the weight of the agricultural work vehicle. Also, some embodiments the method may prevent the amount of wheel slip reaching levels that may lead to immobilisation of the tractor in the field. In other words, the method may prevent the work vehicle from getting stuck in the soil due to excessive amounts of wheel-slip for prolonged periods of time.

When determining the actuator-control-signal, the method may comprise identifying if an amount of wheel slip, represented by the wheel-slip-data, is below a first predetermined threshold. The method may further comprise determining an actuator-control-signal for moving the ground engaging tools when the amount of wheel slip exceeds the first predetermined threshold or above the second threshold.

In another embodiment, the method may comprise identifying if an amount of wheel slip, represented by the wheel-slip-data, is above a second predetermined threshold. The method may further comprise determining an actuator-control-signal for moving the ground engaging tools when the amount of wheel slip falls below the second predetermined threshold or above the second threshold.

In one example, the method may comprise identifying if an amount of wheel slip, represented by the wheel-slip-data, is within a range defined by the first and second thresholds, the first threshold being higher than the second threshold. The method may further comprise determining an actuator-control-signal for moving the ground engaging tools when the amount of wheel slip is outside of the above range.

Consider a scenario in which a work vehicle (tractor) moves along a field that includes an uphill section halfway along the working row. At the beginning of the uphill climb, the wheel slip experienced by the driven wheel will noticeably increase due to the load increase on the agricultural work vehicle. The change in wheel slip may be represented by the wheel-slip-data. Once the amount of wheel slip exceeds a predetermined threshold, the method may comprise determining an actuator-control-signal to compensate for the increase in wheel slip experienced by the work vehicle. For example, the actuator-control-signal may comprise instructions that result in reducing the working depth of one or more of the ground engaging tools in order to decrease the load experienced by the work vehicle during the uphill climb. This will immediately reduce the amount of wheel slip experienced by the driven wheel of the work vehicle during the uphill climb. Alternatively, the actuator-control-signal may comprise instructions that result in a transfer of the weight of the agricultural implement frame onto the driven wheels of the work vehicle to increase traction on the driven wheels. For instance, this actuator-control-signal may be applicable to lower the front end and/or lift the back end of the implement frame.

It will be appreciated that a certain amount of wheel slip may sometimes be desirable, since there may be an increased likelihood of damage to the vehicle transmission if an amount of wheel slip experienced by the work vehicle drops below a predetermined threshold. Accordingly, in some embodiments, the method may be configured to artificially increase wheel slip if the wheel slip drops below a predetermined threshold. Consider an agricultural work vehicle travelling across a field with a downhill section starting halfway through the working row. At the beginning of the downhill section, the amount of wheel slip will typically drop. This may be determined by a control unit on the basis of the wheel-slip-data and used to determine an actuator-control-signal for moving the at least one ground engaging tool in such a way that the loss in wheel slip may be compensated. For example, the actuator-control-signal may comprise instructions that result in an increase of the working depth of one or more of the ground engaging tools in order to increase the load experienced by the work vehicle during the downhill section. This will immediately increase the amount of wheel slip experienced by the driven wheel of the work vehicle. In another example, the amount of wheel slip may be increased by determining an actuator-control-signal for moving the at least one ground engaging tool such that a traction on the driven wheels of the work vehicle is reduced. In one example, this may be achieved by transferring more of the weight of the agricultural implement frame onto the implement wheel, and thus away from the driven wheels of the work vehicle.

A determination of an appropriate actuator-control-signal may be performed in various ways. In one example, the suitable actuator-control-signal is calculated on the basis of the wheel-slip-data received. The wheel-slip-data may include a number of revolutions of the driven wheel shaft of a work vehicle as well as a current ground speed of the work vehicle. The control unit may use such wheel-slip-data to calculate the expected ground speed of the work vehicle on the basis of the wheel axle revolutions and compare it to the current ground speed in order to determine the amount of wheel slip. Alternatively, the control unit may receive an amount of wheel-slip from a CAN bus of the agricultural vehicle.

Once the amount of wheel slip is determined, a suitable actuator-control-signal may be calculated by means of a predetermined formula. For example, the formula may consider the amount of wheel slip, the ground conditions at the current position of the machinery and the desired amount of wheel slip at this particular moment. In more detail, the desired amount of wheel slip may be provided to the control unit as target-wheel-slip-data predetermined by the manufacturer of the work vehicle or the operator. The control unit may use the target-wheel-slip-data to determine a difference between the values of the wheel-slip-data and the target-wheel-slip-data. This difference represents the necessary wheel slip adjustment to be achieved with the actuator-control-signal for moving components of the implement.

It will be appreciated that the effect a movement of one or more components of the agricultural via the actuator-control-signal has on the wheel slip may also be dependent on the ground conditions. Accordingly, the control unit may also be configured to receive location-data indicative of a current position of the plough within the field. On the basis of the location-data, the control unit may determine the ground conditions (gradient, soil conditions, etc.) of the field at the current position of the plough via a database including field-data. The field-data may be representative of ground conditions that were obtained prior to the ploughing operation, e.g. by prior ploughing operations or by means of a dedicated measurement drone.

On the basis of the necessary wheel slip adjustment and the ground conditions, the control unit may calculate an appropriate actuator-control-signa.

If in the above example, the control unit determines that the amount of wheel slip has to be decreased by two percent, the necessary actuator-control-signal may be calculated, taking into consideration the density of the soil at the current location and calculating how many ground engaging tools have to be manipulated (e.g. by reduction of the working depth or removal of the tools from the soil) in order to achieve a two percent decrease in wheel slip.

Alternatively, the actuator-control-signal may be looked up by the control unit using a database comprising various actuator-control-signals linked to a desired amount of wheel slip change and a variety of soil conditions.

The actuator-control-signal may also be determined repeatedly, e.g. until the control unit determines that a desired level of wheel slip is reached. For example, a control unit may calculate or look-up an appropriate first actuator-control-signal and provide the signal to the corresponding actuator mechanism to effect a first amount of wheel slip change. The control unit may then, again, determine the remaining amount of wheel slip on the basis of the wheel-slip-data and compare it to a desired amount of wheel slip, such as the target-wheel-slip-data discussed above. If the control unit determines that remaining amount of wheel slip still differs from the desired amount of wheel slip, the control unit may then determine a second actuator-control-signal to compensate for the remaining difference between the desired and the current amount of wheel slip. Of course, this control loop may be repeated repeatedly for as long as the amount of wheel slip is not aligned with the desired amount of wheel slip. The control unit of this embodiment may include a P, PI, PID controller or any other suitable controller for performing the above control loop.

In one example of the above periodical determination of the actuator-control-signal, the control unit may generate a first actuator-control-signal that may change a current position of the at least one ground engaging tool by a predetermined offset amount. If the values of the wheel-slip-data still do not reach the desired wheel slip value after application of the first actuator control signal, the control unit may generate a second actuator-control-signal that may change a current position of the at least one ground engaging tool by the predetermined offset amount. The control unit may repeat the above until the desired amount of wheel slip has been reached. In some examples, the actuator-control-signal may increase or decrease the predetermined offset amount over time. For instance, the first actuator-control-signal may raise the at least one ground engaging tool by a first predetermined offset distance (such as 10cm) whereas the second actuator-control-signal may raise the at least one ground engaging tool by a second, reduced predetermined offset distance (such as 5cm). The control unit may determine a new actuator-control-signal periodically, e.g. every 10 to 20 seconds, until the desired amount of wheel slip is achieved.

The control unit may calculate the actuator-control-signal based on the magnitude of the wheel slip. For example, the control unit may calculate the actuator-control-signal based on the differences between the one or an average of several values of the wheel-slip-data the and a corresponding value of the target-wheel-slip-data. The control unit may be configured to determine an actuator-control-signal for more significant movement of the implement frame components for higher differences.

As indicated above, the amount of current wheel slip or future wheel slip experience by the driven wheel is based on wheel-slip data that may be provided to a corresponding control unit in various ways. A non-exhaustive list of exemplary wheel-slip-data is shown below.

In one embodiment, the wheel-slip-data may comprise current wheel speed values of the driven wheel. This may be used in connection with current ground speed values of the work vehicles, as outlined above, in order to determine a current amount of wheel slip experienced by the driven wheel.

In another example, the wheel-slip-data may comprise a moisture content of the soil. If the moisture content of the soil in certain parts of the field is predetermined and stored in a database of a control unit as soil-moisture-data, then the control unit may use this soil-moisture-data to determine locations within the field that may cause a change in the amount of wheel slip experienced by the driven wheel. For example, the control unit may receive location-data from a location sensor (e.g. a GPS) that is arranged on the agricultural machinery. The control unit is thus able to determine the current location of the agricultural machinery at any time and match the current location to a location of the soil-moisture-data. On the basis of the soil-moisture-data, the control unit may determine that the soil in the next working row is significantly softer than the soil in the current working row. In this instance, the control unit may predict a significant increase in wheel slip during the next working row. The predicted increase in wheel slip may be calculated or looked-up in a database on the basis of the moisture content parameters received with the wheel-slip-data.

On the basis of the above, the control unit of the present disclosure may then *"pro-actively"* determine appropriate actuator-control-signals to accommodate for the future increase in moisture content of the soil (and thus for higher wheel slip), e.g. in the next working row.

In another example, the wheel-slip-data may comprise soil compaction levels of the soil of the field to be worked. To this end, a database of the control unit may include soil-compaction-data, which may be used by the control unit to determine predicted changes in the amount of wheel slip experienced by the driven wheel as the work vehicle navigates the field. Again, the soil compaction levels of the field may be used to predict the future amounts of wheel slip due to the change in drag (higher compaction levels resulting in higher drag forces created by the ploughing operation and thus higher wheel-slip) and to pre-emptively move one or more components of the plough implement (e.g. one or more of the ground engaging tools) in order to compensate for the predicted change in wheel slip.

In another embodiment, the wheel-slip-data may comprise contours of the field. This may refer to any longitudinal or lateral gradient of the field with respect to a horizontal plane (i.e. a level field). An uphill section may result in increased wheel-slip, whereas downhill sections may decrease the amount of wheel-slip experienced by the work vehicle. Based on this wheel-slip-data, the control-unit may reduce wheel slip before/during an uphill section and increase wheel slip before/during a downhill section. As mentioned above, reducing and/or increasing the amount of wheel slip experienced by the driven wheels may be achieved by way of moving one or more components of the plough implement to either change the load or the traction of the work vehicle.

Other examples of wheel-slip-data include the soil type and the temperature of the soil, both of which will influence the amount of wheel slip experienced by the work vehicle and may be used by a control unit to determine future wheel slip if changes in soil type or temperature of the soil are expected.

Wheel-slip-data including the temperature of the soil may be particularly useful in winter when ground friction may be particularly low at temperatures, e.g. below four degrees Celsius. On the basis of such temperature information as part of the wheel-slip-data, a control unit may determine an actuator-control-signal that is suitable for increasing the traction of the work vehicle before the operation on the working field is commenced. In one embodiment, this may be achieved by lifting the back end or lowering the front end of the plough implement frame.

It will be appreciated that a change in wheel slip experienced by the work vehicle may be caused by a variety of adjustments to one or more components of the plough implement. A non-exhaustive list of exemplary actuator-control-signals for moving components of the plough implement is shown below together with their respective effect on the amount of wheel slip experienced by the work vehicle:
In one example, the actuator-control-signal may comprise instructions for changing the working depth of the ground engaging tool(s). Changing the working depth of one or more ground engaging tools may increase or decrease the amount of wheel slip. In one example, the working depth of one or more of the ground engaging tools may be decreased, thereby decreasing the load (drag) and thus the amount of wheel slip experienced by the driven wheels. Similarly, increasing the working depth of one or more of the ground engaging tools may increase the load and thereby increase the amount of wheel slip experienced by the driven wheels.

In another embodiment, the actuator-control-signal may comprise instructions for removing one or more of the ground engaging tools from the soil. Removal of ground engaging tools from the soil may result in reduced load experienced by the work vehicle, which may in turn reduce the amount of wheel slip. Removal of ground engaging tools from the soil may, therefore, be particularly advantageous in parts of the field where the work vehicle has to navigate steep inclines. In one example, removal of the ground engaging tools from the soil is only performed between adjacent working rows so as to not to result in incomplete furrows along the length of the working row.

The actuator-control-signal may also comprise instructions for changing the working width of the ground engaging tools. For example, a plough-width-adjustment-actuator, such as the actuator 70 shown in Figure 3, may be used to change the angle of the main frame with respect to a ploughing direction on the basis of the actuator-control-signal. For example, if the amount of wheel slip is too low, the working width of the ground engaging tools may be reduced to decrease the load acting on the work vehicle, thereby also decreasing the amount of wheel slip. By contrast, if the working width of the ground engaging tools is increased, this will result in a higher load acting on the work vehicle and a corresponding increase in wheel slip experienced by the driven wheel.

In yet another example, the actuator-control-signal may comprise instructions for changing the angle of the ground engaging tools with respect to a horizontal plane. During normal ploughing operations (e.g. on substantially level soil), the one or more ground engaging tools of a plough are typically arranged such that a share of the plough bodies is aligned with the horizontal plane. This alignment of the shares with the horizontal plane results in the highest fuel economy. If, however, the work vehicle experiences low wheel slip (e.g. below a predetermined threshold), then the angle of the plough bodies may be altered with respect to the horizontal direction to artificially increase drag, and thus also increase the amount of wheel slip. In one embodiment, this may be achieved by use of a stone-trip-adjustment-mechanism, particularly by decreasing the bias of a stone-trip-adjustment-mechanism.

As mentioned above, the wheel-slip-data may be indicative of current amounts of wheel slip for the driven wheel. Alternatively, or additionally, the wheel-slip-data may also be indicative of predicted future amounts of wheel slip for the driven wheel. Utilising wheel-slip-data that is indicative of predicted future amounts of wheel slip enables the method to be performed *"pro-actively",* i.e. before a change in wheel slip has occurred. As will be explained in more detail below, pro-active change of the position of the ground engaging tools to accommodate for predicted future wheel slip may be performed during headland turning routines, i.e. before the next working row is commenced, to improve the homogeneity of the ploughing results.

Turning to Figure 5, there is shown an embodiment of an agricultural machinery 300, in which the plough implement 310 is arranged at an angle with respect to a horizontal plane. In particular, a rear end of the plough implement 310 is lifted relative to the front end. In the example of Figure 5, this may be achieved by extending the linkage 362 that connects the implement wheel 320 to the main frame 312 of the plough implement 310. As a consequence of the rear end of the plough implement 310 being lifted, the working depth of the plough bodies 322a, 324a, 326a, 328a, 330a gradually decreases from the front towards the rear of the plough implement 310. In fact, the rearmost plough body 330a shown in Figure 5 is entirely removed from the soil due to the extension of the implement wheel linkage 362.

It will be appreciated that adjusting the working depth of the plough bodies 322a to 330a in the way illustrated in Figure 5 will result in a reduced load experienced by the work vehicle. Typically, the reduction in load will coincide with a decrease in wheel slip experienced by the driven wheels (e.g. the rear wheels 318 of the work vehicle 307). Accordingly, Figure 5 shows one way of moving the ground engaging tools (i.e. the plough bodies 322a to 330a) in such a way that the amount wheel slip is reduced. Such an adjustment may be performed if the wheel-slip-data indicates that the amount of wheel slip experienced by the driven wheels (e.g. the rear wheels 318) exceeds a predetermined (first) threshold.

It will be appreciated that the same orientation of the main frame 312 of the plough implement 310 shown in Figure 5 could also be achieved by lowering a headstock 314 with respect to the work vehicle 307 by means of lifting arms 330 (only one shown in Figure 5) that connect the headstock 314 to the rear of the work vehicle 307.

In some embodiments, an actuator of a top-link 332 of the agricultural work vehicle 307 may be used to by the control unit to change the orientation of the main frame 312 to either increase or decrease traction and thus wheel slip of the driven wheels.

Although the embodiment shown in Figure 5 may decrease the amount of wheel slip experienced by the driven wheels of the work vehicle 307, it will also, inevitably, result in an inhomogeneous ploughing result. In particular, the orientation of the plough implement 310 shown in Figure 5 will create four parallel furrows with varying penetration depth, whereas the fifth plough body 330a is lifted out of the soil and, therefore, can no longer create a fifth furrow.

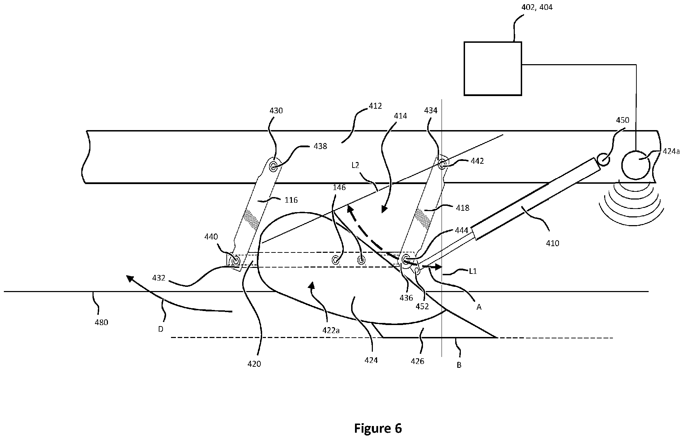

In view of the above, it may be preferable to move individual ground engaging tools (e.g. plough bodies) on the basis of the wheel-slip-data to compensate for current or predicted future changes in wheel slip experienced by the work vehicle 307. One embodiment of an actuator mechanism for moving a single ground engaging tool (e.g. a single plough body) is schematically illustrated in Figure 6.

Figure 6 is a schematic representation of the connection between a section of a main frame 412 and a first ground engaging tool 422a, e.g. a plough body. It will be understood that the complete plough implement may have a plurality of first ground engaging tools and a plurality of second ground engaging tools similar to plough implement 10 shown in Figures 1A to 1C. Figure 6 only shows the connection between the main frame 412 and one of the plurality of first ground engaging tools. The first ground engaging tool 422a is a plough body but could also be any other suitable ground engaging tool, such as a skimmer, a cultivator tine, etc.

The first ground engaging tool 422a (i.e. the plough body) comprises a mould board 424 and a share 426. The first ground engaging tool 422a is connected to the main frame 412 via a four-bar-linkage 414. The four-bar-linkage 414 is a parallelogram linkage. The four-bar-linkage 414 includes a base, which is represented by the main frame 412, a first pivotable link 416, a second pivotable link 418, and a coupler link 420. The first pivotable link 416 is pivotably connected to the main frame 412 at a first end 430 and pivotably connected to the coupler link 420 at an opposite, second end 432. The second pivotable link is connected to the main frame at a first end 434 and connected to the coupler link 420 at an opposite, second end 436.

The first pivotable link 416 is connected to the main frame 412 at its first end 430 via a pivot 438. At its opposite, second end 432 the first pivotable link 416 is connected to the coupler link 420 via a pivot 440. The second pivotable link 418 is connected to the main frame at its first end 434 via a pivot 442. At its opposite, second end 436, the second pivotable link 418 is connected to the coupler link 420 via a pivot 444.

The pivotable bars 416 and 418 are identical in length, i.e. the distance between the pivots 438, 440 of the first pivotable link 416 is identical to the distance between the pivots 442, 440 of the second pivotable link 418.

The distance between the first pivot 438 of the first pivotable link 416 and the first pivot 442 of the second pivotable link 418 is identical to the distance between the second pivot 440 of the first pivotable link 416 and the second pivot 444 of the second pivotable link 418. The first and second pivotable bars 416, 418 are arranged in parallel to each other. The coupler link 420 and the base (represented by part of the main frame 412 between pivots 438 and 442) are arranged in parallel.

The first ground engaging tool 422a (plough body) is connected to the coupler link 420. In this example, the first ground engaging tool 422a may be removably connected to the coupler link 420 via fastening members 446. Of course, any other fastening method may also be feasible to connect the first ground engaging tool 422a to the coupler link 420.

It will be understood that whenever the four-bar-linkage 414 is moved, the first and second pivotable bars 416, 418 remain parallel. Similarly, the coupler link 420 will always remain parallel to the base bar, i.e. to the main frame 412, during movement. A range of movement is schematically shown in Figure 6 with arrow A. Arrow A shows the possible trajectory of the second pivot 444 during movement of the four-bar-linkage 414. Of course, the second pivot 440 of the first pivotable link 416 has a corresponding range of movement. The pivot 444 may move between a first end position indicated by line L1 and a second end position indicated by line L2. As pivot 444 moves between its first end position and second end position along arrow A, so does pivot 440 of the first pivotable link 416. Consequently, coupler link 420 will undergo the same motion. It follows that in the first end position of second pivotable link 418, indicated by line L1, the coupler link 420 is at its lowest point, i.e. at a maximum distance from main frame 412. In the second end position of the second pivotable link 418, the coupler link 420 is at its top end, i.e. closest to main frame 412. Accordingly, the working depth of the ground engaging tool 422a, which is connected to coupler link 420, changes as the first and second pivotable links 416, 418 pivot about their respective first pivots 438, 442. Accordingly, the first ground engaging tool 422a also moves between a first position, in which a maximum working depth is set, i.e. when the second pivotable link 418 is aligned with line L1, and a second position, in which a minimum working depth is set, i.e. when the second pivotable link 418 is aligned with line L2.

It follows that the working depth of the first ground engaging tool 422a, shown in the embodiment of Figure 6, is individually adjustable, irrespective of the ground clearance of the main frame 412 and independently of the working depth of any of the other ground engaging tools of the plough implement. Accordingly, the distance between the implement wheel and the main frame may be fixed, such that the ground clearance of the main frame 412 remains stable.

Of course, other ground engaging tools may be connected to the main frame in similar ways as the first ground engaging tool 422a.

An actuator 410 is provided to move the four-bar-linkage between the first and second end positions. The actuator 410 and the four-bar-linkage 414 are part of an actuator mechanism for moving the ground engaging tools. In particular, the actuator 410 is configured for adjusting the working depth of the first ground engaging tool 422a by moving the first ground engaging tool 422a with respect to the main frame 412.

The actuator 410 according to the embodiment of Figure 6 is a hydraulic cylinder. The chambers of the hydraulic cylinder may be connected to the existing hydraulic system of a corresponding work vehicle (not shown), which will supply pressurised hydraulic fluid to actuate movement of the four-bar-linkage 414. A first end 450 of the actuator 410 is connected to the main frame 412. A second end 452 of the actuator 410 is connected to the coupler link 420 of the four-bar-linkage 414. Accordingly, in the embodiment of Figure 6, the second pivotable link 418 will be moved towards its first end position indicated by line L1 when the hydraulic cylinder is retracted. Similarly, the second pivotable link 418 will be moved in the opposite direction, towards its second end position indicated by line L2, when the hydraulic cylinder is extended. Mechanical end stops may be provided to limit movement of the four-bar-linkage 414 and potentially lock four-bar-linkage 414 into its first and/or second end position.

In view of the above, an extension of the actuator 410 in Figure 6 will cause the ground engaging tool 422a to be raised, i.e. a decrease in working depth. Similarly, a retraction of actuator 410 will cause the first ground engaging tool 422a to be pushed further into the soil, thereby increasing the working depth.

Compared to the embodiment shown in Figure 5, in which all of the ground engaging tools are adjusted simultaneously by changing the ground clearance of the main frame 12 via the implement wheel linkage 362 and the headstock 14, Figure 6 shows an embodiment, in which each of the ground engaging tools may be adjusted independently. It will be understood that a similar arrangement may be provided for a depth adjustment of the skimmers of the plough implement. It follows that the ground engaging tools, whether they are plough bodies or skimmers, may, in some embodiments, be individually adjustable with a depth adjustment apparatus such as the one shown in Figure 6.

Utilising the individual depth adjustment apparatus of Figure 6, the method of the present disclosure may be used to individually move some or each of the ground engaging tools of the plough implement on basis of the determined actuator-control-signal, which in turn is based on the wheel-slip-data received. This embodiment will allow more precise adjustment of the plough implement 10 and may provide more homogeneous ploughing results.

It should be appreciated that the depth adjustment means shown in Figure 6 is only one embodiment of many various possibilities. For example, the four bar linkage 414 of the depth adjustment apparatus may also be replaced by a single pivotable link or an extendable support leg that is arranged at an oblique angle with respect to the main frame. Similarly, the actuator 410 may be replaced by any other suitable actuator, such as an electric motor or a pneumatic actuator.

In one example, the method of the present disclosure may comprise removing one of the ground engaging tools (e.g. one plough body) from the soil and, at the same time, maintaining the position of the remaining ground engaging tools of the plough implement. According to this example, the working depth of most of the plough bodies will remain unchanged, such that a homogeneous ploughing result with the same depth furrows will be achieved.

As a consequence of removing one of the ground engaging tools from the soil completely, the number of furrows will be reduced by one. If done partway along a working row, this will cause inhomogeneous ploughing results, with one part of the working row being ploughed with five furrows and the remainder with four or fewer furrows. Accordingly, it may be best to remove one or more of the ground engaging tools from the soil between tillage of adjacent working rows only. In other words, the method of the present disclosure may delay removal of one or more of the ground engaging tools (e.g. in order to reduce the amount of wheel slip experienced by the work vehicle) until a current working row is completed. If, for the next working row, it is expected that the amount of wheel slip will again exceed a first threshold, the control unit may determine an actuator-control-signal for removing one of the ground engaging tools from the soil. This actuator-control-signal may then be provided to the corresponding actuator mechanism during a headland routine such that the next working row is performed with fewer furrows, thereby reducing wheel slip to an acceptable amount.

The control unit may be configured to selectively remove one or more ground engaging tools once the current working row is completed. In one example, the control unit may be configured to remove the plough body that exhibits the furthest distance from the last furrow of the previous working row. In a reversible plough, the control unit may be configured to remove the last plough body of the frame (30a/30b in Figure 1A) such that the agricultural vehicle may continue to plough *"in furrow"* even if one or more of the plough bodies are removed from the soil.

If the movement of the ground engaging tool or tools is delayed until the current working row is completed, the method of the present disclosure may comprise temporarily decreasing the wheel speed of the agricultural work vehicle. Decreasing the wheel speed temporarily may sufficiently reduce the amount of wheel slip to an acceptable amount until the current working row is completed. Should decreasing the wheel speed not result in acceptable amounts of wheel slip, the method may additionally comprise temporarily reducing the working depth of one or more of the ground engaging tools to further reduce the wheel slip. It will be appreciated that a reduced wheel speed of the agricultural work vehicle and/or a decreased working depth of one or more ground engaging tools may not be an acceptable solution for permanently controlling the wheel slip of the driven wheels. Rather, this embodiment suggests reducing the wheel speed/changing the working depth only temporarily, until a current working row has been completed. Once the current working row is completed, the control unit of the agricultural machinery may determine an actuator-control-signal that will compensate for the variance in wheel slip experienced during the last working row, without a need for the agricultural machinery to travel at reduced speed/the working depth to be reduced.

Consider a situation, in which the agricultural plough encounters more compact soil halfway through the current working row. This will usually result in increased wheel slip experienced by the driven wheels. Rather than moving the ground engaging tools to compensate for the increase in wheel slip (e.g. removing one or more of the plough bodies from the soil), the method may comprise delaying such an adjustment until the current working row is completed. In the meantime, the method may compensate for the increased wheel slip caused by the denser soil by means of reducing the work vehicle speed until the current working row has been completed. Once the current working row has been completed, the control unit may determine and provide an actuator-control-signal including instructions to remove one or more of the ground engaging tools for the next run/working row. In the above scenario, the wheel slip for the next working row may then again be corrected to a desired level without the need for reducing the speed of the work vehicle any longer.

In yet another embodiment, a control unit may temporarily change a speed ratio between the rear wheels and the front wheels if movement of the ground engaging tool is delayed until the current working row is completed. It will be appreciated that this embodiment is only applicable to all wheel drive work vehicles. Rather than reducing the speed of the work vehicle until the end of the working row, this example comprises temporarily shifting the wheel speed in favour of the set of wheels that have the most traction, therefore, temporarily reducing the amount of wheel slip. In one example, the control unit may temporarily raise a rear wheel speed with respect to the front wheel speed. Raising the rear wheel speed with respect to the front wheel speed may be achieved either by increasing the rear wheel speed or by decreasing the front wheel speed. Alternatively, the control unit may temporarily raise the front wheel speed with respect to the rear wheel speed. Raising the front wheel speed with respect to the rear wheel speed may be achieved either by increasing the front wheel speed or decreasing the rear wheel speed. Raising the front wheel speed may be advantageous as the front wheels can sometimes have more traction then the rear wheels, due to the front wheels working in undamaged soil.

The listing or discussion of an apparently prior-published document in this specification should not necessarily be taken as an acknowledgement that the document is part of the state of the art or is common general knowledge.

## Claims

1. A computer-implemented method for controlling an operation of an agricultural machinery (300), the agricultural machinery comprising:
a work vehicle (307) with at least one driven wheel (318);
an agricultural implement (310) connected to the work vehicle (307) and comprising at least one ground engaging tool (322a, 324a, 326a, 328a, 330a); and
an actuator mechanism for moving at least components of the agricultural implement with respect to the work vehicle,
wherein the method comprises:
receiving wheel-slip-data indicative of an amount of wheel slip for the driven wheel of the work vehicle;
determining an actuator-control-signal for moving at least components of the agricultural implement on the basis of the wheel-slip-data;
**characterised by**
providing the determined actuator-control-signal to the actuator mechanism of the agricultural machinery between tillage of successive working rows.

2. The computer-implement method of Claim 1, wherein determining the actuator-control-signal comprises identifying if an amount of wheel slip represented by the wheel-slip-data is above a first predetermined threshold, and moving components of the agricultural implement if the amount of wheel sleep is above the first predetermined threshold, and/or wherein determining the actuator-control-signal comprises identifying if an amount of wheel slip represented by the wheel-slip-data is below a second predetermined threshold, and moving components of the agricultural implement if the amount of wheel sleep is below the second predetermined threshold.

3. The computer-implemented method of Claim 1 or 2, wherein the actuator-control-signal is determined on the basis of a difference between an amount of wheel slip represented by the wheel-slip-data and a desired amount of wheel slip.

4. The computer-implemented method of any one of Claims 1 to 3, wherein the actuator-control-signal is determined repeatedly, preferably at periodic time intervals.

5. The computer-implemented method of any one of Claims 1 to 4, wherein the agricultural implement comprises a driven implement wheel, the method comprising determining an implement-wheel-control-signal for setting a desired implement wheel speed on the basis of the wheel-slip-data.

6. The computer-implemented method of any one of Claims 1 to 5, wherein the actuator-control-signal comprises one or more of:
instructions for changing the working depth of the ground engaging tool;
instructions for removing the ground engaging tool from the soil;
instructions for changing the working width of the agricultural implement;
instructions for changing the pitch angle of a main frame of the agricultural implement;
instructions for changing the angle of the ground engaging tool with respect to a horizontal plane;
instructions for decreasing a bias of a stone-trip-mechanism of the ground engaging tools.

7. The computer-implemented method of any one of Claims 1 to 6, wherein the wheel-slip-data is indicative of current or predicted future amounts of wheel slip for the driven wheel.

8. The computer-implemented method of any one of Claims 1 to 7, wherein the wheel-slip-data comprises one or more of:
current wheel speed values of the driven wheel;
current ground speed values of the work vehicle;
a moisture content of the soil;
soil compaction levels of the soil;
contours of the field;
a soil type;
a temperature of the soil.

9. The computer-implemented method of any one of Claims 1 to 8, comprising delaying a movement of components of the agricultural implement with respect to the work vehicle until a current working row is completed, if an amount of wheel slip represented by the wheel-slip-data is above a first predetermined threshold or if an amount of wheel slip represented by the wheel-slip-data is below a second predetermined threshold.

10. The computer-implemented method of Claim 9, comprising temporarily decreasing the wheel speed of the agricultural work vehicle, if movement of the ground engaging tool is delayed until the current working row is completed.

11. The computer-implemented method of Claim 9, wherein the agricultural work vehicle comprises at least one driven front wheel and at least one driven rear wheel, and wherein the method comprises temporarily changing a speed ratio between the rear wheels and the front wheels, if movement of the ground engaging tool is delayed until the current working row is completed.

12. A control unit for controlling an agricultural machinery, the agricultural machinery comprising:
an agricultural work vehicle (307) comprising at least one driven wheel (318);
an agricultural implement (310) comprising at least one ground engaging tool (322a, 324a, 326a, 328a, 330a);
an actuator mechanism for moving at least components of the agricultural implement with respect to the work vehicle,
wherein the control unit is configured to:
receive wheel-slip-data indicative of an amount of wheel slip for the driven wheel of the work vehicle;
determine an actuator-control-signal for moving at least components of the agricultural implement on the basis of the wheel-slip-data; and
**characterised in that** the control unit is further configured to
provide the determined actuator-control-signal to the actuator mechanism of the agricultural machinery between tillage of successive working rows.

13. A computer program comprising instructions which, when the program is executed by a control unit, cause the control unit to perform the method of any of Claims 1 to 11.

14. An agricultural implement, particularly a plough implement, comprising the control unit of Claim 12.

## Patentansprüche

1. Computerimplementiertes Verfahren zum Steuern eines Betriebs einer landwirtschaftlichen Maschine (300), wobei die landwirtschaftliche Maschine aufweist:
ein Arbeitsfahrzeug (307) mit mindestens einem angetriebenen Rad (318);
ein landwirtschaftliches Arbeitsgerät (310), das mit dem Arbeitsfahrzeug (307) verbunden ist und mindestens ein bodeneingreifendes Werkzeug (322a, 324a, 326a, 328a, 330a) aufweist; und
einen Betätigungsmechanismus, um mindestens Bestandteile des landwirtschaftlichen Arbeitsgeräts in Bezug zu dem Arbeitsfahrzeug zu bewegen,
wobei das Verfahren folgende Schritte aufweist:
Empfangen von Radschlupfdaten, die kennzeichnend für einen Betrag an Radschlupf des angetriebenen Rads des Arbeitsfahrzeugs sind;
Bestimmen eines Betätigungssteuersignals, um mindestens Bestandteile des landwirtschaftlichen Arbeitsgeräts auf Basis der Radschlupfdaten zu bewegen;
**gekennzeichnet durch**
Bereitstellen des bestimmten Betätigungssteuersignals an den Betätigungsmechanismus der landwirtschaftlichen Maschine zwischen der Bodenbearbeitung aufeinanderfolgender Arbeitsreihen.

2. Computerimplementiertes Verfahren nach Anspruch 1, wobei das Bestimmen des Betätigungssteuersignals ein Identifizieren, ob ein für die Radschlupfdaten stehender Betrag an Radschlupf über einem ersten vorbestimmten Grenzwert liegt, und ein Bewegen von Bestandteilen des landwirtschaftlichen Arbeitsgeräts aufweist, wenn der Betrag an Radschlupf über dem ersten vorbestimmten Grenzwert liegt, und/oder wobei das Bestimmen des Betätigungssteuersignals ein Identifizieren, ob ein für die Radschlupfdaten stehender Betrag an Radschlupf unter einem zweiten vorbestimmten Grenzwert liegt, und ein Bewegen von Bestandteilen des landwirtschaftlichen Arbeitsgeräts aufweist, wenn der Betrag an Radschlupf unter dem zweiten vorbestimmten Grenzwert liegt.

3. Computerimplementiertes Verfahren nach Anspruch 1 oder 2, wobei das Betätigungssteuersignal auf Basis einer Differenz aus dem für die Radschlupfdaten stehenden Betrag an Radschlupf und einem angestrebten Betrag an Radschlupf bestimmt wird.

4. Computerimplementiertes Verfahren nach einem der Ansprüche 1 bis 3, wobei das Betätigungs-Steuersignal wiederholt bestimmt wird, vorzugsweise in periodischen Zeitintervallen.

5. Computerimplementiertes Verfahren nach einem der Ansprüche 1 bis 4, wobei das landwirtschaftliche Arbeitsgerät ein angetriebenes Arbeitsgerät-Rad aufweist, wobei das Verfahren ein Bestimmen eines Arbeitsgerät-Rad-Steuersignals zum Festlegen einer angestrebten Arbeitsgerät-Radgeschwindigkeit auf Basis der Radschlupfdaten aufweist.

6. Computerimplementiertes Verfahren nach einem der Ansprüche 1 bis 5, wobei das Betätigungssteuersignal eine oder mehrere der folgenden Befehle aufweist:
Befehle zum Ändern der Arbeitstiefe des bodeneingreifenden Werkzeugs;
Befehle zum Entfernen des bodeneingreifenden Werkzeugs aus dem Boden;
Befehle zum Ändern der Arbeitsbreite des landwirtschaftlichen Arbeitsgeräts;
Befehle zum Ändern des Neigungswinkels eines Hauptrahmens des landwirtschaftlichen Arbeitsgeräts;
Befehle zum Ändern des Winkels des bodeneingreifenden Werkzeugs in Bezug zu einer horizontalen Ebene;
Befehle zum Verringern einer Vorspannung eines Steinrückzugsmechanismus des bodeneingreifenden Werkzeugs.

7. Computerimplementiertes Verfahren nach einem der Ansprüche 1 bis 6, wobei die Radschlupfdaten kennzeichnend für einen aktuellen oder einen prognostizierten zukünftigen Betrag an Radschlupf des angetriebenen Rads sind.

8. Computerimplementiertes Verfahren nach einem der Ansprüche 1 bis 7, wobei die Radschlupfdaten eine oder mehrere der folgenden Daten aufweisen:
aktuelle Radgeschwindigkeitswerte des angetriebenen Rads;
aktuelle Bodengeschwindigkeitswerte des Arbeitsfahrzeugs;
einen Feuchtegehalt des Bodens;
einen Bodenverdichtungsgrad des Bodens;
Konturen des Felds;
einen Bodentyp;
eine Temperatur des Bodens.

9. Computerimplementiertes Verfahren nach einem der Ansprüche 1 bis 8, das ein Verzögern eines Bewegens von Bestandteilen des landwirtschaftlichen Arbeitsgeräts in Bezug zu dem Arbeitsfahrzeug aufweist, bis eine aktuelle Arbeitsreihe fertiggestellt ist, wenn ein für die Radschlupfdaten stehender Betrag an Radschlupf über einem ersten vorbestimmten Grenzwert liegt oder wenn ein für die Radschlupfdaten stehender Betrag an Radschlupf unter einem zweiten vorbestimmten Grenzwert liegt.

10. Computerimplementiertes Verfahren nach Anspruch 9, das das temporäre Verringern der Radgeschwindigkeit des landwirtschaftlichen Fahrzeugs aufweist, wenn ein Bewegen des bodeneingreifenden Werkzeugs verzögert ist, bis die aktuelle Arbeitsreihe fertiggestellt ist.

11. Computerimplementiertes Verfahren nach Anspruch 9, wobei das landwirtschaftliche Arbeitsfahrzeug mindestens ein angetriebenes Vorderrad und mindestens ein angetriebenes Hinterrad aufweist und wobei das Verfahren ein temporäres Ändern eines Geschwindigkeitsverhältnisses zwischen den Hinterrädern und den Vorderrädern aufweist, wenn ein Bewegen des bodeneingreifenden Werkzeugs verzögert ist, bis die aktuelle Arbeitsreihe fertiggestellt ist.

12. Steuereinheit zum Steuern einer landwirtschaftlichen Maschine, wobei die landwirtschaftliche Maschine aufweist:
ein landwirtschaftliches Arbeitsfahrzeug (307) mit mindestens einem angetriebenen Rad (318);
ein landwirtschaftliches Arbeitsgerät (310) mit mindestens einem bodeneingreifenden Werkzeug (322a, 324a, 326a, 328a, 330a);
einen Betätigungsmechanismus zum Bewegen mindestens von Bestandteilen des landwirtschaftlichen Arbeitsgeräts in Bezug zu dem Arbeitsfahrzeug,
wobei die Steuereinheit eingerichtet ist zum:
Empfangen von Radschlupfdaten, die kennzeichnend für einen Betrag an Radschlupf des angetriebenen Rads des Arbeitsfahrzeugs sind;
Bestimmen eines Betätigungssteuersignals, um mindestens Bestandteile des landwirtschaftlichen Arbeitsgeräts auf Basis der Radschlupfdaten zu bewegen; und
**dadurch gekennzeichnet, dass**
die Steuereinheit des Weiteren dazu eingerichtet ist, das bestimmte Betätigungssteuersignal dem Betätigungsmechanismus der landwirtschaftlichen Maschine zwischen der Bodenbearbeitung aufeinanderfolgender Arbeitsreihen bereitzustellen.

13. Computerprogramm, das Befehle aufweist, die, wenn das Programm von einer Steuereinheit ausgeführt wird, die Steuereinheit dazu veranlassen, das Verfahren nach einem der Ansprüche 1 bis 11 auszuführen.

14. Landwirtschaftliches Arbeitsgerät, insbesondere ein Pflugarbeitsgerät, mit der Steuereinheit nach Anspruch 12.

## Revendications

1. Procédé informatique de commande du fonctionnement d'une machine agricole (300), la machine agricole comprenant :
un véhicule de travail (307) avec au moins une roue entraînée (318) ;
un outil agricole (310) relié au véhicule de travail (307) et comprenant au moins un outil en prise avec le sol (322a, 324a, 326a, 328a, 330a) ;
un mécanisme d'actionnement permettant de déplacer au moins les composants de l'outil agricole par rapport au véhicule de travail,
dans lequel le procédé comprend :
la réception des données de patinage de roue indicatives d'un degré de patinage de roue pour la roue entraînée du véhicule de travail ;
la détermination d'un signal de commande de l'actionneur afin de déplacer au moins les composants de l'outil agricole en fonction des données de patinage de roue ;
**caractérisé par**
la fourniture du signal de commande de l'actionneur déterminé au mécanisme d'actionnement de la machine agricole entre le labour des rangées de travail successives.

2. Procédé mis en oeuvre par ordinateur selon la revendication 1, dans lequel la détermination du signal de commande de l'actionneur consiste à identifier si un degré de patinage représenté par les données de patinage de roue est supérieur à un premier seuil prédéterminé, et à déplacer les composants de l'outil agricole si le degré de patinage de roue est supérieur au premier seuil prédéterminé, et/ou dans lequel la détermination du signal de commande de l'actionneur consiste à identifier si un degré de patinage représenté par les données de patinage de roue est inférieur à un second seuil prédéterminé, et à déplacer les composants de l'outil agricole si le degré de patinage de roue est inférieur au second seuil prédéterminé.

3. Procédé mis en oeuvre par ordinateur selon la revendication 1 ou 2, dans lequel le signal de commande de l'actionneur est déterminé en fonction d'une différence entre un degré de patinage représenté par les données de patinage de roue et un degré souhaité de patinage de roue.

4. Procédé mis en oeuvre par ordinateur selon l'une quelconque des revendications 1 à 3, dans lequel le signal de commande de l'actionneur est déterminé à plusieurs reprises, de préférence à intervalles de temps périodiques.

5. Procédé mis en oeuvre par ordinateur selon l'une quelconque des revendications 1 à 4, dans lequel l'outil agricole comprend une roue d'outil entraînée, le procédé consistant à déterminer un signal de commande de roue d'outil afin de régler une vitesse de roue d'outil souhaitée en fonction des données de patinage de roue.

6. Procédé mis en oeuvre par ordinateur selon l'une quelconque des revendications 1 à 5, dans lequel le signal de commande de l'actionneur comprend un ou plusieurs des éléments suivants :
instructions de modification de la profondeur de travail de l'outil en prise avec le sol ;
instructions de retrait de l'outil en prise avec le sol du sol ;
instructions de modification de la largeur de travail de l'outil agricole ;
instructions de modification de l'angle d'inclinaison d'un châssis principal de l'outil agricole ;
instructions de modification de l'angle de l'outil en prise avec le sol par rapport à un plan horizontal ;
instructions de diminution de biais d'un mécanisme de détection de pierres des outils en prise avec le sol.

7. Procédé mis en oeuvre par ordinateur selon l'une quelconque des revendications 1 à 6, dans lequel les données de patinage de roue indiquent les degrés courants ou prévus de patinage futur de la roue entraînée.

8. Procédé mis en oeuvre par ordinateur selon l'une quelconque des revendications 1 à 7, dans lequel les données de patinage de roue comprennent une ou plusieurs données parmi :
des valeurs courantes de vitesse de roue de la roue entraînée ;
des valeurs courantes de vitesse de déplacement du véhicule de travail ;
une teneur en humidité du sol ;
des niveaux de compactage du sol ;
des contours du champ ;
un type de sol ;
une température du sol.

9. Procédé mis en oeuvre par ordinateur selon l'une quelconque des revendications 1 à 8, comprenant le retard d'un mouvement des composants de l'outil agricole par rapport au véhicule de travail jusqu'à ce qu'une rangée de travail en cours soit achevée, si un degré de patinage représenté par les données de patinage de roue est supérieur à un premier seuil prédéterminé ou si un degré de patinage représenté par les données de patinage de roue est inférieur à un second seuil prédéterminé.

10. Procédé mis en oeuvre par ordinateur selon la revendication 9, comprenant une diminution temporaire de la vitesse de roue du véhicule de travail agricole, si le mouvement de l'outil en prise avec le sol est retardé jusqu'à l'achèvement de la rangée de travail en cours.

11. Procédé mis en oeuvre par ordinateur selon la revendication 9, dans lequel le véhicule de travail agricole comprend au moins une roue avant entraînée et au moins une roue arrière entraînée, et dans lequel le procédé comprend la modification temporaire d'un rapport de vitesse entre les roues arrière et les roues avant, si le mouvement de l'outil en prise avec le sol est retardé jusqu'à ce que la rangée de travail en cours soit achevée.

12. Unité de commande permettant de commander une machine agricole, la machine agricole comprenant :
un véhicule de travail agricole (307) comprenant au moins une roue entraînée (318) ;
un outil agricole (310) comprenant au moins un outil en prise avec le sol (322a, 324a, 326a, 328a, 330a) ;
un mécanisme d'actionnement permettant de déplacer au moins les composants de l'outil agricole par rapport au véhicule de travail,
dans lequel l'unité de commande est configurée pour :
recevoir les données de patinage de roue indiquant un degré de patinage de roue pour la roue entraînée du véhicule de travail ;
déterminer un signal de commande de l'actionneur afin de déplacer au moins les composants de l'outil agricole en fonction des données de patinage de roue ; et
**caractérisé en ce que**
l'unité de commande est configurée de manière à fournir le signal de commande de l'actionneur déterminé au mécanisme d'actionnement de la machine agricole entre le labour des rangées de travail successives.

13. Programme informatique comprenant des instructions qui, lorsque le programme est exécuté par une unité de commande, font que l'unité de commande met en oeuvre le procédé selon l'une quelconque des revendications 1 à 11.

14. Outil agricole, en particulier un outil de charrue, comprenant l'unité de commande selon la revendication 12.
